# EUROPEAN PATENT APPLICATION

(11) **EP 4 645 537 A1**
(43) Date of publication of application: **05.11.2025**
(21) Application number: 24750494.7
(22) Date of filing: 25.01.2024
(51) Int. Cl.: H01M 50/131, H01M 50/119, H01M 50/121, H01M 50/126

(54) **POUCH FILM LAMINATE AND SECONDARY BATTERY**

(30) Priority: 03.02.2023 KR 20230015125
(71) Applicant: LG Energy Solution, Ltd., Seoul 07335 (KR)
(72) Inventor: Song, Dae Woong, Daejeon 34122 (KR); Hwang, Soo Ji, Daejeon 34122 (KR); Kim, Sang Hun, Daejeon 34122 (KR); Kang, Min Hyeong, Daejeon 34122 (KR)
(74) Representative: Plasseraud IP
(86) International application number: PCT/KR2024/001186
(87) International publication number: WO 2024/162692

(57) **Abstract**

A pouch film laminate according to the present invention includes a first base material layer, a second base material layer, a gas barrier layer, and a sealant layer which are sequentially laminated, wherein the moisture content index of the second base layer, which is represented by the following Formula 1, is 17,000 ppm·g/cm3 or less. Moisture content index of second base layer = Moisture content (ppm) per unit weight of pouch film laminate× density (g/cm3) of pouch film laminate × thickness (µm) of pouch film laminate/thickness (µm) of second base layer

## Description

### TECHNICAL FIELD

### Cross-reference to Related Applications

This application is based on and claims priority from Korean Patent Application No. 10-2023-0015125, filed on February 3, 2023 with the Korean Intellectual Property Office, the disclosure of which is incorporated herein in its entirety by reference.

### Technical Field

The present disclosure relates to a pouch film laminate and a pouch-type secondary battery manufactured by molding the same.

### BACKGROUND ART

Secondary batteries are used in various fields, including compact products such as digital cameras, P-DVD, MP3P, mobile phones, PDAs, portable game devices, power tools and E-bikes, as well as large products that require high power such as electric cars and hybrid cars, power storage devices that store surplus generated power or renewable energy, and power storage devices for backup. The types of secondary batteries include nickel cadmium batteries, nickel hydrogen batteries, lithium ion batteries and lithium ion polymer batteries.

A secondary battery may be manufactured by putting an electrode assembly in a battery casing, injecting an electrolyte, and sealing the battery casing. In the electrode assembly, a positive electrode, a negative electrode and a separator interposed therebetween are alternately stacked. Secondary batteries are classified into, for example, a pouch type, and a can type, according to a material of a casing accommodating the electrode assembly.

A pouch-type secondary battery may be manufactured by performing press-processing on a flexible pouch film laminate to form a cup portion, putting an electrode assembly in an inner accommodation space of the cup portion, and sealing a sealing portion. The pouch film laminate is formed of a plurality of layers in which a polymer film such as polyethylene terephthalate is stacked on one surface of a gas barrier layer made of a metal material, and a sealant layer to which a thermoplastic polyolefin-based resin is applied is stacked on the other surface. When a pouch-type battery casing is sealed, the sealant layer may form a sealing portion through mutual thermal bonding.

Recently, as the increase of the capacity of a pouch-type secondary battery progresses, demand for pouches with improved moldability is increasing. The pouch generally includes a base layer formed as an outermost layer to protect a secondary (or rechargeable) battery from friction and collision with the outside; a gas barrier layer stacked inside the base layer to secure the mechanical strength of the pouch, from example, to block gas and moisture from entering from the outside of the secondary battery, and to prevent an electrolyte from leaking from the inside of a pouch-type battery casing; and a sealant layer stacked inside the gas barrier layer, which is for completely sealing the inside of the battery casing through mutual thermal bonding when the pouch-type battery casing is sealed.

### DISCLOSURE OF THE INVENTION

### TECHNICAL PROBLEM

An aspect of the present disclosure provides a pouch film laminate and a process for sealing a pouch-type battery casing manufactured from the pouch film laminate, in such a manner to prevent deformation of a sealed portion and to shorten the sealing time, so that both sealing quality and processing time for sealing are improved over the conventional art pouches.

### TECHNICAL SOLUTION

According to one embodiment of the present disclosure, a pouch film laminate is provided, which includes a first base layer, a second base layer, a gas barrier layer and a sealant layer, which are sequentially stacked, in which the moisture content index of the second base layer, which is represented by the following Formula 1, is 17,000 ppm·g/cm3 or less. Moisture content index of the second base layer = Moisture content (ppm) per unit weight of the pouch film laminate × density (g/cm3) of pouch film laminate × thickness (µm) of pouch film laminate/thickness (µm) of second base layer

The moisture content per unit weight of the pouch film laminate may be approximately 1,500 ppm or less.

The thickness of the first base layer may be approximately 10 µm to 50 µm. The first base layer may include a polyester-based film. Specifically, the first base layer may include at least one type of polyester-based film selected from the group consisting of polyethyleneterephthalate, polybutyleneterephthalate and polyethylenenaphthalate.

The thickness of the second base layer may be approximately 10 µm to 50 µm. The second base layer may include a polyamide-based film. Specifically, the second base layer may include at least one type of polyamide-based film selected from the group consisting of nylon 6, nylon 6,6, nylon MXD6 (polyxylylene adipamide), nylon 4, nylon 4, 6 and nylon 4,10. The melting temperature of the second base layer may be approximately 220°C or more.

The thickness of the gas barrier layer may be approximately 30 µm to 100 µm.

The gas barrier layer may contain aluminum.

The thickness of the sealant layer may be approximately 30 µm to 130 µm.

According to another embodiment of the present disclosure, provided is a pouch-type battery casing manufactured by molding the above described pouch film laminate.

According to another embodiment of the present disclosure, provided is a pouch-type secondary battery that includes the pouch-type battery casing manufactured by molding the above described pouch film laminate, and an electrode assembly accommodated in the pouch-type battery casing.

### ADVANTAGEOUS EFFECTS

In the present disclosure, the moisture content index of the second base layer, which is represented by the above Formula 1, is approximately 17,000 ppm·g/cm3 or less. Thus, even when the pouch-type battery casing manufactured from the pouch film laminate is sealed at a temperature of 220°C or more, bubbles can be suppressed from being generated by vaporization of moisture in the second base layer, and thus, it is possible to shorten the sealing time, while preventing the deformation of the sealing portion. As a result, it is possible to secure sealing quality and processability in the pouch-type battery casing manufactured from the pouch film laminate of the present disclosure, and to improve durability and lifetime characteristics of the pouch-type secondary battery.

### BRIEF DESCRIPTION OF THE DRAWINGS

The drawings accompanying the specification are illustrative of embodiments of the present disclosure and serve to further illustrate the technical ideas of the present disclosure in conjunction with the foregoing description, and the present disclosure is not to be construed as limited to what is illustrated in such drawings.
FIG. 1 is a cross-sectional view of a pouch film laminate according to the present disclosure.
FIG. 2 is a disassembled view of a pouch-type secondary battery according to the present disclosure.

### MODE FOR CARRYING OUT THE INVENTION

Advantages and characteristics of the present disclosure and a method of achieving the advantages and characteristics will become clear by referring to embodiments described in detail below together with the accompanying drawings. However, the present disclosure is not limited to the embodiments to be described below but may be implemented in various different forms. These embodiments are provided merely to ensure that the present disclosure is completely disclosed and to fully inform a person ordinarily skilled in the art to which the present disclosure pertains of the scope of the present disclosure. The present disclosure is defined only by the claims. Like reference numerals indicate like components throughout the specification.

Unless otherwise defined, all terms (including technical and scientific terms) used in the present specification may be used with meanings that can be commonly understood by a person with ordinary skill in the technical field to which the present disclosure pertains. Also, terms defined in commonly used dictionaries are not ideally or excessively interpreted unless clearly specifically defined.

The terms used in the present specification are intended to describe embodiments and are not intended to limit the present disclosure. In the present specification, singular forms also include plural forms unless specifically stated in the phrase. "Comprises" and/or "comprising" used in the specification does not exclude the presence or addition of one or more other components in addition to mentioned components.

In the present specification, when it is said that a certain part includes a certain component, this means that the certain part may further include other components rather than excluding other components unless specifically stated to the contrary.

In the present specification, the description of "A and/or B" means A or B, or A and B.

In the present specification, "%" means weight% unless otherwise explicitly indicated.

In this specification, after a pouch film laminate was cut to a size of 50 mm × 40 mm, a moisture content per unit weight of the pouch film laminate was measured as a weight (µg/g = ppm) of moisture contained in the pouch film laminate per unit weight of the pouch film laminate at 150°C using a Karl Fischer moisture meter.

### Pouch Film Laminate

The pouch film laminate according to the present disclosure includes a first base layer, a second base layer, a gas barrier layer and a sealant layer which are sequentially stacked, and the moisture content index of the second base layer, which is represented by the following formula 1, is 17,000 ppm·g/cm3 or less. Moisture content index of the second base layer = Moisture content (ppm) per unit weight of the pouch film laminate × density (g/cm3) of pouch film laminate × thickness (µm) of pouch film laminate/thickness (µm) of second base layer

In the case of a conventional pouch film laminate, although the first base layer prevents moisture penetration from the outside of a pouch, the moisture may reach the second base layer from the outside of the pouch through the first base layer due to the limitations of the thickness and material of the first base layer. In this case, the moisture may form a hydrogen bond with a functional group in the polymer included in the second base layer (ex: an amide structure), and then may be easily absorbed by the second base layer. As a result, when the conventional pouch film laminate was sealed at a high temperature, there was a problem in that the moisture absorbed by the second base layer vaporized so that bubbles were generated in the second base layer, and thus the sealing portion of the pouch was deformed and damaged, thereby degrading the insulation of the pouch.

The present disclosure has solved the above problem by lowering the moisture content of the pouch film laminate to a predetermined level or less. Specifically, in the pouch film laminate according to the present disclosure, the moisture content index of the second base layer, which is represented by the above formula 1, is approximately 17,000 ppm·g/cm3 or less. As a result, even when the pouch film laminate of the present disclosure is sealed at a high temperature, bubbles caused by vaporization of moisture in the second base layer may be suppressed from being generated. Thus, it is possible to prevent damage to the sealing portion and to improve the durability and the lifetime characteristics of a pouch-type secondary battery.

In the present disclosure, the moisture content index of the second base layer, which is represented by the above Formula 1, may be 17,000 ppm·g/cm3 or less, specifically, 1,000 ppm·g/cm3 to 17,000 ppm·g/cm3, more specifically 1,000 ppm·g/cm3 to 16,000 ppm·g/cm3. Here, the moisture content index of the second base layer means the weight (ppm·g/cm3) of moisture contained in the second base layer per unit volume of the second base layer. If the moisture content index of the second base layer exceeds 17,000 ppm·g/cm3, in the process of sealing a pouch-type battery casing manufactured from the pouch film laminate, when sealing is performed at a temperature condition of 220°C or more so as to supply a sufficient amount of heat within a predetermined tact time, the moisture contained in the second base layer is vaporized so that bubbles are generated in the second base layer. This causes a problem in that the sealing portion is deformed and damaged, thereby degrading the insulation of the pouch.

The moisture content per unit weight of the pouch film laminate according to the present disclosure may be 1,500 ppm or less, specifically, 100 ppm to 1,500 ppm, more specifically 100 ppm to 1,000 ppm. Here, the moisture content per unit weight of the pouch film laminate means the weight (µg/g = ppm) of moisture contained in the pouch film laminate per unit weight of the pouch film laminate. When the moisture content per unit weight of the pouch film laminate satisfies the above numerical range, the content of moisture contained in the second base layer in the pouch film laminate can be relatively lowered. As a result, even if the pouch film laminate is sealed at a temperature of 220°C or more, bubbles can be suppressed from being generated by vaporization of moisture in the second base layer, and thus damage to the sealing portion can be prevented. Meanwhile, the moisture content per unit weight of the pouch film laminate may vary depending on the amount of moisture in the air within the chamber where the pouch film laminate is stored, and/or the exposure time of the pouch film laminate to the air, but the method of controlling the moisture content is not limited to this.

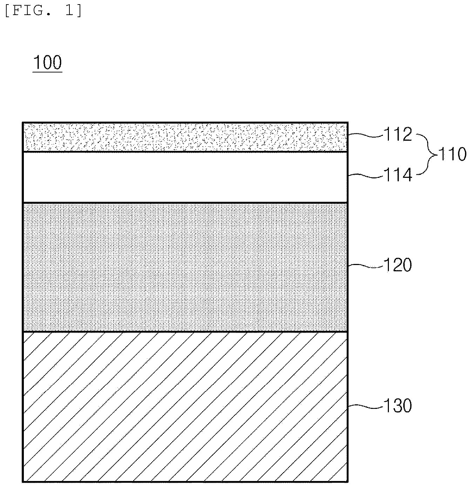

Meanwhile, FIG. 1 is a cross-sectional view of a pouch film laminate 100 according to the present disclosure. Hereinafter, each configuration of the pouch film laminate 100 of the present disclosure will be described in more detail with reference to FIG. 1.

### (1) Base Layer

A base layer 110 is formed on the outermost layer of the pouch film laminate 100 to protect a secondary battery from friction and collision with the outside. The base layer 110 is made of a polymer and can electrically insulate an electrode assembly from the outside.

The thickness of the base layer 110 may be 5 µm to 100 µm, specifically, 7 µm to 70 µm, more specifically 25 µm to 60 µm. When the thickness of the base layer 110 satisfies the aforementioned range, the external insulation becomes excellent, and the entire pouch is of minimal thickness. Thus, the energy density is strong relative to the volume of the secondary battery.

The base layer 110 according to the present disclosure may have a composite film structure where two or more materials are formed as layers, respectively. In the composite film structure, an adhesive layer may be additionally formed between the layers.

Specifically, the base layer 110 according to the present disclosure may include a first base layer 112 and a second base layer 114. In this case, the first base layer 112 may be a layer disposed on the outermost layer of the pouch film laminate, and the second base layer 114 may be a layer disposed between the first base layer 112 and a gas barrier layer 120. The first base layer 112 and the second base layer 114 may be made of different materials and/or physical properties, from each other. An interface may exist between the first base layer 112 and the second base layer 114. This means that the first base layer 112 and the second base layer 114 are different layers, and that the first base layer 112 and the second base layer 114 can be separately formed.

Hereinafter, each of the above described first base layer 112 and the second base layer 114 will be described in more detail.

### 1) First Base Layer

As described above, the first base layer 112 may be a layer disposed on the outermost layer of the pouch film laminate. In this case, the first base layer 112 may perform a role of preventing moisture penetration from the outside of the pouch.

The first base layer 112 may be made of one or more materials selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon and glass fiber. Preferably, the first base layer 112 may include a polyester-based film having wear resistance and heat resistance. For example, the first base layer 112 may include at least one type selected from the group consisting of polyethyleneterephthalate, polybutyleneterephthalate and polyethylenenaphthalate, but the present disclosure is not limited thereto.

The thickness of the first base layer 112 may be 10 µm to 50 µm, specifically, 10 µm to 40 µm, more specifically 12 µm to 25 µm. When the thickness of the first base layer 112 satisfies the above numerical range, it is possible to effectively suppress the moisture penetration into the pouch film laminate while securing the insulation and moldability of the pouch. Also, since the entire pouch is of minimal thickness, the energy density is strong relative to the volume of the secondary battery.

### 2) Second Base Layer

As described above, the second base layer 114 may be a layer disposed between the first base layer 112 and the gas barrier layer 120. In this case, the second base layer 114 may perform a role of improving the moldability of the pouch.

The second base layer 114 may include a polyamide-based film. For example, the second base layer 114 may include at least one type selected from the group including nylon 6, nylon 6,6, nylon MXD6 (polyxylylene adipamide), nylon 4, nylon 4,6 and nylon 4,10, but the present disclosure is not limited thereto. Preferably, the second base layer 114 may include nylon 6. In this case, there is an advantage in that the moldability of the pouch can be improved due to the excellent elongation characteristics of nylon 6.

The thickness of the second base layer 114 may be 10 µm to 50 µm, specifically, 10 µm to 40 µm, more specifically, 15 µm to 35 µm. When the thickness of the second base layer 114 satisfies the above numerical range, the moldability of the pouch can be satisfied and a decrease in the energy density can be prevented relative to the volume of the secondary battery because the thickness of the pouch film laminate is increased minimally, if at all.

The second base layer 114 may include metal oxide particles. The metal oxide particles are hydroxylated by reacting with moisture flowing into the second base layer 114, so that the moisture in the second base layer 114 can be removed. The metal oxide particles may contain at least one type selected from the group including CaO, MnO, SrO, MgO and ZnO. Preferably, the metal oxide particles may contain at least one of CaO and MgO advantageous for hydroxylation with moisture.

The second base layer 114 may further include an additive. When the additive is included in the second base layer 114, the physical properties of the second base layer 114 can be changed. For example, as an additive for controlling the tensile strength of the second base layer 114, at least one of carbon fiber, glass fiber and aramid fiber may be added.

### (2) Gas Barrier Layer

The gas barrier layer 120 is stacked between the base layer 110 and a sealant layer 130 to secure the mechanical strength of the pouch, to block gas, moisture, etc. from entering from the outside of the secondary battery, and to prevent an electrolyte from leaking from the inside of the pouch-type battery casing.

The gas barrier layer 120 may be made of a metal. For example, the gas barrier layer may be a metal thin film containing one or more types of metals selected from the group including aluminum (Al), copper (Cu), stainless steel (SUS), nickel (Ni), titanium (Ti) and INVAR, but the present disclosure is not limited thereto.

According to one embodiment of the present disclosure, the gas barrier layer 120 may be formed of an aluminum alloy thin film. When the gas barrier layer 120 is formed using an aluminum alloy thin film, it is possible to attain mechanical strength of a predetermined level or more, and also to attain a light weight, which compensates for electrochemical properties caused by the electrode assembly and the electrolyte, coupled with heat dissipation. The aluminum alloy thin film may contain elements other than aluminum (Al). For example, the aluminum alloy thin film may include one or more types selected from the group including iron (Fe), copper (Cu), chromium (Cr), manganese (Mn), nickel (Ni), magnesium (Mg), silicon (Si) and zinc (Zn).

In another example, the gas barrier layer 120 may be formed of a stainless steel thin film. Specifically, the gas barrier layer 120 may be manufactured by molding and/or processing the stainless steel thin film. The gas barrier layer 120, when made of stainless steel, has a relatively low thermal conductivity, which is effective in preventing or delaying heat diffusion to other cells during thermal runaway, and has a relatively high toughness, which can suppress the occurrence of cracks in the pouch during use of the pouch-type battery. The stainless steel may contain elements other than iron (Fe), for example, one or more types selected from the group including copper (Cu), chromium (Cr), manganese (Mn), nickel (Ni), magnesium (Mg), silicon (Si), and zinc (Zn).

The thickness of the gas barrier layer 120 may be 30 µm to 100 µm, specifically, 30 µm to 90 µm, more specifically, 40 µm to 80 µm. When the thickness of the gas barrier layer 120 satisfies the above range, moldability during molding of a cup portion and gas barrier performance are improved.

### (3) Sealant Layer

The sealant layer 130 is for completely sealing the inside of the pouch-type battery casing through mutual thermal bonding at the sealing portion when the pouch-type battery casing accommodating the electrode assembly therein is sealed. For this, the sealant layer 130 may be made of a material having excellent thermal adhesive strength.

The sealant layer 130 may be made of a material having insulation, corrosion resistance, and sealing properties. Specifically, the sealant layer 130 is in direct contact with the electrode assembly and/or the electrolyte inside the pouch-type battery casing, and thus may be made of a material having insulation and corrosion resistance. Also, the sealant layer 130 has to completely seal the inside of the pouch-type battery casing to block material movement between the inside and the outside, and thus may be made of a material having high sealing properties (e.g., excellent thermal adhesive strength). In order to secure such insulation, corrosion resistance, and sealing properties, the sealant layer 130 may be made of a polymer material.

The sealant layer 130 may be made of one or more materials selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber, and preferably may be made of a polyolefin-based resin such as polypropylene (PP) and/or polyethylene (PE). In this case, polypropylene may include cast polypropylene (CPP), acid modified polypropylene (PPa), polypropylene-ethylene copolymer and/or polypropylene-butylene-ethylene terpolymer.

The thickness of the sealant layer 130 may be 30 µm to 130 µm, specifically, 50 µm to 120 µm, more specifically, 70 µm to 100 µm. When the thickness of the sealant layer satisfies the above range, there is an effect of securing the sealing strength of the sealing portion while securing the moldability of the pouch film laminate.

Meanwhile, the sealant layer 130 according to the present disclosure may have a single film structure made of any one material. Alternatively, the sealant layer 130 may have a composite film structure where two or more materials are formed as layers, respectively. Specifically, the sealant layer 130 may include a first sealant layer and a second sealant layer. In this case, the first sealant layer may be a layer disposed adjacent to the gas barrier layer, and the second sealant layer may be a layer disposed on the first sealant layer. The first sealant layer and the second sealant layer may be made of raw materials with different materials and/or physical properties, respectively. An interface may exist between the first sealant layer and the second sealant layer. This means that the first sealant layer and the second sealant layer are different layers, and the first sealant layer and the second sealant layer can be separately formed.

The first sealant layer may be made of acid modified polypropylene (PPa) in order to secure long-term adhesive performance between the gas barrier layer and the first sealant layer. Here, the acid modified polypropylene may be maleic anhydride polypropylene (MAH PP).

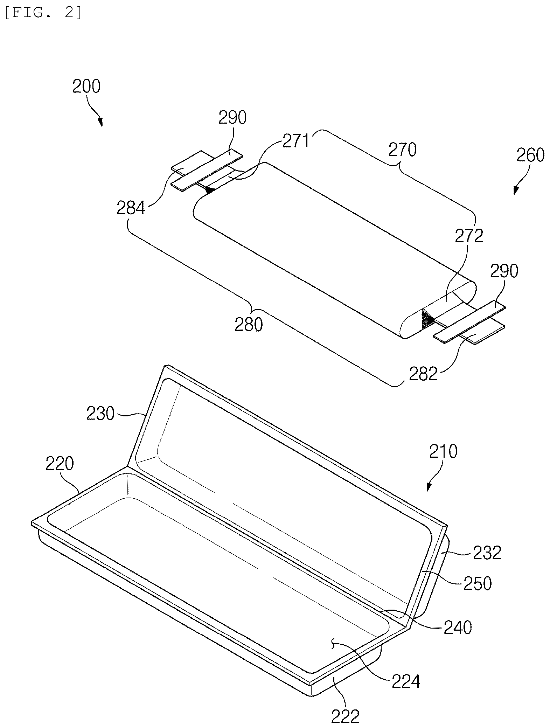

The second sealant layer may be made of a material having insulation, corrosion resistance, and sealing properties. Specifically, the second sealant layer is in direct contact with the electrode assembly (260 in FIG. 2) and/or the electrolyte inside the accommodation space (224 in FIG. 2), and thus may be made of a material having insulation and corrosion resistance. Also, the second sealant layer has to completely seal the inside of the battery casing to block material movement between the inside and the outside, and thus may be made of a material having high sealing properties. In order to secure such insulation, corrosion resistance, and sealing properties, the second sealant layer may be made of one or more materials selected from the group including polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber. Preferably, the second sealant layer may be made of a polyolefin-based resin such as polypropylene (PP) and/or polyethylene (PE). In this case, polypropylene may include cast polypropylene, acid modified polypropylene, polypropylene-ethylene copolymer, and/or polypropylene-butylene-ethylene terpolymer. Here, the acid modified polypropylene may be maleic anhydride polypropylene (MAH PP). More preferably, the second sealant layer may contain cast polypropylene (CPP) having thermal sealability and high tensile strength.

### Pouch-Type Secondary Battery

Next, a pouch-type secondary battery according to the present disclosure will be described.

The pouch-type secondary battery according to the present disclosure includes a pouch-type battery casing manufactured by molding the above described pouch film laminate, and an electrode assembly accommodated in the pouch-type battery casing. Specifically, the pouch-type secondary battery according to the present disclosure includes the pouch-type battery casing in which the electrode assembly is accommodated. The pouch-type battery casing is manufactured by molding the pouch film laminate. The pouch film laminate includes the first base layer, the second base layer, the gas barrier layer and the sealant layer which are sequentially stacked. The moisture content index of the second base layer, which is represented by the following formula 1, is 17,000 ppm·g/cm3 or less. Moisture content index of the second base layer = moisture content (ppm) per unit weight of the pouch film laminate × density (g/cm3) of pouch film laminate × thickness (µm) of pouch film laminate/thickness (µm) of second base layer

Hereinafter, each configuration of the pouch-type secondary battery of the present disclosure will be described in more detail with reference to FIG. 2.

FIG. 2 is a disassembled view of a pouch-type secondary battery 200 according to the present disclosure. As illustrated in FIG. 2, the pouch-type secondary battery 200 of the present disclosure may include a pouch-type battery casing 210, an electrode assembly 260, an electrode lead 280, an insulator 290 and an electrolyte (not illustrated).

### (1) Pouch-Type Battery Casing

The pouch-type battery casing 210 may be manufactured by molding the aforementioned pouch film laminate of the present disclosure. Inside the pouch-type battery casing 210, the electrode assembly 260 may be accommodated. The detailed configuration and physical properties of the pouch film laminate are the same as described above, and thus specific descriptions thereof will be omitted.

In order to manufacture the pouch-type battery casing 210, the pouch film laminate may be subjected to drawing processing and stretched by a punch. As a result, the pouch-type battery casing 210 may include a cup portion 222 and an accommodation portion 224. The accommodation portion 224 is a place where the electrode assembly is accommodated, and may mean an accommodation space that is formed in a pocket shape inside the cup portion 222 as the cup portion 222 is formed.

According to one embodiment of the present disclosure, the pouch-type battery casing 210 may include a first casing 220 and a second casing 230 as illustrated in FIG. 2. The first casing 220 may include the accommodation portion 224 capable of accommodating the electrode assembly 260, and the second casing 230 may cover the accommodation portion 224 from above so that the electrode assembly 260 does not escape to the outside of the battery casing 210. The first casing 220 and the second casing 230 may be manufactured such that one sides are connected to each other as illustrated in FIG. 2, but the present disclosure is not limited thereto. The first casing 220 and the second casing 230 may be manufactured in various ways, such as being separated from each other and separately manufactured.

According to another embodiment of the present disclosure, in forming a cup portion in the pouch film laminate, one pouch film laminate may be subjected to drawing processing such that two symmetrical cup portions 222 and 232 may be adjacent to each other. In this case, as illustrated in FIG. 2, the cup portions 222 and 232 may be formed in the first casing 220 and the second casing 230, respectively. After the electrode assembly 260 is accommodated in the accommodation portion 224 provided in the cup portion 222 of the first casing 220, a bridge portion 240 formed between the two cup portions 222 and 232 may be folded such that the two cup portions 222 and 232 face each other. In this case, the cup portion 232 of the second casing 230 may accommodate the electrode assembly 260 from above. Therefore, since the two cup portions 222 and 232 accommodate one electrode assembly 260, the thicker electrode assembly 260 can be accommodated than when one cup portion 222 is present. Also, since one edge of the secondary battery 200 is formed by folding the pouch-type battery casing 210, the number of edges to be sealed may be reduced when a sealing process is performed later. Accordingly, the process speed of the pouch-type secondary battery 200 may be improved, and the number of sealing processes may be reduced.

The pouch-type battery casing 210 may be sealed in a state where the electrode assembly 260 is accommodated such that a portion of the electrode lead 280 to be described below, that is, a terminal portion, is exposed. Specifically, when the electrode lead 280 is connected to an electrode tab 270 of the electrode assembly 260, and the insulator 290 is formed on a portion of the electrode lead 280, the electrode assembly 260 may be accommodated in the accommodation portion 224 provided in the cup portion 222 of the first casing 220, and the second casing 230 may cover the accommodation portion 224 from above. Next, the electrolyte may be injected into the accommodation portion 224 and a sealing portion 250 formed on edges of the first casing 220 and the second casing 230 may be sealed.

The sealing portion 250 may perform a role of sealing the accommodation portion 224. Specifically, the sealing portion 250 may be formed along the edges of the accommodation portion 224 while sealing the accommodation portion 224. The temperature at which the sealing portion 250 is sealed may be 180°C to 250°C, specifically, 200°C to 250°C, more specifically, 210°C to 240°C. When the sealing temperature satisfies the above numerical range, in the pouch-type battery casing 210, it is possible to attain sufficient sealing strength through thermal bonding.

### (2) Electrode Assembly

The electrode assembly 260 may be inserted into the pouch-type battery casing 210, and then may be sealed by the pouch-type battery casing 210 after the electrolyte is injected.

The electrode assembly 260 may be formed by sequentially stacking a positive electrode, a separator, and a negative electrode. Specifically, the electrode assembly 260 may include two types of electrodes, a positive electrode and a negative electrode, and a separator interposed between the electrodes to insulate the electrodes from each other.

The positive electrode and the negative electrode may have structures where active material slurries are applied to electrode current collectors in the form of a metal foil or a metal mesh, the electrode current collectors containing aluminum and copper, respectively. The slurry may be generally formed by stirring a granular active material, an auxiliary conductor, a binder, a conductive material, etc. in a state where a solvent is added. The solvent may be removed in a subsequent process.

The slurry obtained by mixing an electrode active material with a binder and/or a conductive material is applied to a positive electrode current collector and a negative electrode current collector to manufacture the positive electrode and the negative electrode, and the manufactured positive electrode and the negative electrode are stacked on both sides of the separator, respectively, so that the electrode assembly 260 may be manufactured into a predetermined shape. The types of the electrode assembly 260 may include a stack type, a jelly roll type, and a stack and folding type, but are not limited thereto.

The electrode assembly 260 may include the electrode tab 270.

The electrode tabs 270 may be connected to the positive electrode and the negative electrode of the electrode assembly 260, respectively, and may protrude outward from the electrode assembly 260, so as to become paths through which electrons flow (move) between the inside and the outside of the electrode assembly 260. The electrode current collector included in the electrode assembly 260 may be composed of a portion to which the electrode active material is applied and a distal portion to which the electrode active material is not applied, that is, an uncoated portion. The electrode tab 270 may be formed by cutting the uncoated portion or may be formed by connecting a separate conductive member to the uncoated portion through ultrasonic welding, etc. As illustrated in FIG. 2, the electrode tabs 270 may protrude from the electrode assembly 260 in different directions, respectively, but the present disclosure is not limited thereto. The electrode tabs 270 may be formed to protrude in various directions, such as protruding side by side in the same direction from one side.

### (3) Electrode Lead

The electrode lead 280 may supply electricity to the outside of the secondary battery 200. The electrode lead 280 may be connected to the electrode tab 270 of the electrode assembly 260 by spot welding, etc.

The electrode lead 280 may be connected to the electrode assembly 260, and may protrude to the outside of the pouch-type battery casing 210 via the sealing portion 250. Specifically, one end of the electrode lead 280 may be connected to the electrode assembly 260, particularly the electrode tab 270, and the other end of the electrode lead 280 may protrude to the outside of the pouch-type battery casing 210.

The electrode lead 280 may include a positive electrode lead 282 having one end connected to a positive electrode tab 272 and extending in a direction in which the positive electrode tab 272 protrudes, and an negative electrode lead 284 having one end connected to an negative electrode tab 271 and extending in a direction in which the negative electrode tab 271 protrudes. Both the positive electrode lead 282 and the negative electrode lead 284 may have the other ends protruding to the outside of the battery casing 210. Therefore, electricity generated inside the electrode assembly 260 may be supplied to the outside. Also, since the positive electrode tab 272 and the negative electrode tab 271 are formed to protrude in various directions, respectively, the positive electrode lead 282 and the negative electrode lead 284 may also extend in various directions, respectively. Materials of the positive electrode lead 282 and the negative electrode lead 284 may be different from each other. That is, the positive electrode lead 282 may be made of the same aluminum (Al) material as the positive electrode current collector, and the negative electrode lead 284 may be made of the same copper (Cu) material as the negative electrode current collector or a copper material coated with nickel (Ni). A portion of the electrode lead 280 protruding to the outside of the battery casing 210 may become a terminal portion and then may be electrically connected to an external terminal.

### (4) Insulator

The insulator 290 may prevent electricity generated from the electrode assembly 260 from flowing to the battery casing 210 through the electrode lead 280, and may maintain sealing of the battery casing 210. For this, the insulator 290 may be formed of a nonconductor that is non-conductive and is not well electrified. In general, as for the insulator 290, an insulating tape or film that is easily attached to the electrode lead 280 and has a relatively thin thickness is often used, but the present disclosure is not limited thereto. Any member capable of insulating the electrode lead 280 may be used.

The insulator 290 may be disposed to surround the outer peripheral surface of the electrode lead 280. Specifically, at least a part of the electrode lead 280 may be surrounded by the insulator 290. In this case, the insulator 290 may be disposed between the electrode lead 280 and the pouch-type battery casing 210. The insulator 290 may be positioned selectively in the sealing portion 250 where the first casing 220 and the second casing 230 of the pouch-type battery casing 210 are thermally fused, thereby allowing the electrode lead 280 to adhere to the battery casing 210.

### (5) Electrolyte

The pouch-type secondary battery 200 according to the present disclosure may further include an electrolyte (not illustrated) injected into the pouch-type battery casing 210. The electrolyte is for moving lithium ions generated by the electrochemical reaction of electrodes during charging/discharging of the secondary battery 200, and may include a non-aqueous organic electrolyte solution that is a mixture of a lithium salt and organic solvents or a polymer using a polymer electrolyte. Further, the electrolyte may include a sulfide-based, oxide-based or polymer-based solid electrolyte. This solid electrolyte may have flexibility so that the solid electrolyte can be easily deformed by an external force.

Hereinafter, the present disclosure will be described in more detail through various examples. However, the following examples are merely examples to aid understanding of the present disclosure, and do not limit the scope of the present disclosure. It is obvious to those skilled in the art that various changes and modifications can be made within the scope of this description and the scope of the technical idea, and it is natural that these variations and modifications fall within the scope of the attached patent claims.

### Examples and Comparative Examples

### Example 1: Production of pouch film laminate

A first adhesive film having a width of 266 mm, a length of 50 m, and a thickness of 3 µm, a nylon film having a width of 266 mm, a length of 50 m, and a thickness of 25 µm, a second adhesive film having a width of 266 mm, a length of 50 m, and a thickness of 3 µm, and a polyethyleneterephthalate (PET) film having a width of 266 mm, a length of 50 m, and a thickness of 12 µm were sequentially stacked on one surface of an aluminum alloy thin film having a width of 266 mm, a length of 50 m, and a thickness of 60 µm. A polypropylene (PP) film having a width of 266 mm, a length of 50 m, and a thickness of 80 µm was stacked on the other surface of the aluminum alloy thin film. As a result, a pouch film laminate was produced with a structure where polypropylene film/aluminum alloy thin film/first adhesive film/nylon film/second adhesive film/polyethyleneterephthalate film were sequentially stacked.

Here, the polypropylene film is a sealant layer, the aluminum alloy thin film is a gas barrier layer, and the first adhesive film, the nylon film, the second adhesive film and the polyethyleneterephthalate film are base layers.

In a state where the pouch film laminate produced by the above method was stored in a chamber, the moisture content in the air within the chamber was adjusted so that the moisture content per unit weight of the pouch film laminate was controlled.

### Example 2: Production of pouch film laminate

A pouch film laminate was produced in the same manner as in Example 1.

Here, the moisture content per unit weight of the pouch film laminate was changed by controlling the moisture content in the air in the chamber where the pouch film laminate was stored.

### Example 3: Production of pouch film laminate

A pouch film laminate was produced in the same manner as in Example 1.

Here, the moisture content per unit weight of the pouch film laminate was changed by controlling the moisture content in the air in the chamber where the pouch film laminate was stored.

### Example 4: Production of pouch film laminate

A pouch film laminate was produced in the same manner as in Example 1 except that an aluminum alloy thin film with a thickness of 40 µm and a nylon film with a thickness of 15 µm were used.

Here, the moisture content per unit weight of the pouch film laminate was changed by controlling the moisture content in the air in the chamber where the pouch film laminate was stored.

### Example 5: Production of pouch film laminate

A pouch film laminate was produced in the same manner as in Example 1 except that an aluminum alloy thin film with a thickness of 40 µm and a nylon film with a thickness of 15 µm were used.

Here, the moisture content per unit weight of the pouch film laminate was changed by controlling the moisture content in the air in the chamber where the pouch film laminate was stored.

### Comparative Example 1: Production of pouch film laminate

A pouch film laminate was produced in the same manner as in Example 1.

Here, the moisture content per unit weight of the pouch film laminate was changed by controlling the moisture content in the air in the chamber where the pouch film laminate was stored.

### Comparative Example 2: Production of pouch film laminate

A pouch film laminate was produced in the same manner as in Example 1.

Here, the moisture content per unit weight of the pouch film laminate was changed by controlling the moisture content in the air in the chamber where the pouch film laminate was stored.

### Comparative Example 3: Production of pouch film laminate

A pouch film laminate was produced in the same manner as in Example 1.

Here, the moisture content per unit weight of the pouch film laminate was changed by controlling the moisture content in the air in the chamber where the pouch film laminate was stored.

### Comparative Example 4: Production of pouch film laminate

A pouch film laminate was produced in the same manner as in Example 1 except that an aluminum alloy thin film with a thickness of 40 µm and a nylon film with a thickness of 15 µm were used.

Here, the moisture content per unit weight of the pouch film laminate was changed by controlling the moisture content in the air in the chamber where the pouch film laminate was stored.

### Comparative Example 5: Production of pouch film laminate

A pouch film laminate was produced in the same manner as in Example 1 except that an aluminum alloy thin film with a thickness of 40 µm and a nylon film with a thickness of 15 µm were used.

Here, the moisture content per unit weight of the pouch film laminate was changed by controlling the moisture content in the air in the chamber where the pouch film laminate was stored.

### Comparative Example 6: Production of pouch film laminate

A pouch film laminate was produced in the same manner as in Example 1 except that an aluminum alloy thin film with a thickness of 40 µm and a nylon film with a thickness of 15 µm were used.

Here, the moisture content per unit weight of the pouch film laminate was changed by controlling the moisture content in the air in the chamber where the pouch film laminate was stored.

### Experimental Example 1: Measurement of moisture content per unit weight of the pouch film laminate and Evaluation of moisture content index of the second base layer

On the pouch film laminate produced in each of Examples 1 to 5, and Comparative Examples 1 to 6, the moisture content per unit weight was measured. Specifically, after the pouch film laminate was cut into a size of 50 mm × 40 mm, the weight of moisture (µg/g = ppm) contained in the pouch film laminate per unit weight of the pouch film laminate was measured at 150 °C by using a Karl Fischer moisture measuring device.

Also, from the moisture content per unit weight of the pouch film laminate and the density value of the pouch film laminate, the moisture content index of the second base layer was calculated in accordance with the following formula 1 and is noted in the following table 1. Moisture content index of the second base layer = Moisture content (ppm) per unit weight of the pouch film laminate × density (g/cm3) of pouch film laminate × thickness (µm) of pouch film laminate/thickness (µm) of second base layer

**[Table 1]**

| | Thickness (µm) | | | Second base layer thickne ss / Gas barrier layer thickne ss | Pouch film laminate | | Second base layer |
|---|---|---|---|---|---|---|---|
| | Pouch film lamin ate | Second base layer | Gas barrier layer | | Densit y (g/cm³ ) | Moistu re conten t (ppm) | Moistur e content index (ppm·g/ cm³) |
| Example 1 | 183 | 25 | 60 | 0.14 | 1.57 | 800 | 9186 |
| Example 2 | 183 | 25 | 60 | 0.14 | 1.57 | 1000 | 11482 |
| Example 3 | 183 | 25 | 60 | 0.14 | 1.57 | 1400 | 16075 |
| Example 4 | 153 | 15 | 40 | 0.10 | 1.44 | 800 | 11784 |
| Example 5 | 153 | 15 | 40 | 0.10 | 1.44 | 1100 | 16203 |
| Comparative Example 1 | 183 | 25 | 60 | 0.14 | 1.57 | 1600 | 18371 |
| Comparative Example 2 | 183 | 25 | 60 | 0.14 | 1.57 | 2000 | 22964 |
| Comparative Example 3 | 183 | 25 | 60 | 0.14 | 1.57 | 2400 | 27557 |
| Comparative Example 4 | 153 | 15 | 40 | 0.10 | 1.44 | 1300 | 19149 |
| Comparative Example 5 | 153 | 15 | 40 | 0.10 | 1.44 | 1600 | 23568 |
| Comparative Example 6 | 153 | 15 | 40 | 0.10 | 1.44 | 1900 | 27987 |

### Experimental Example 2: Evaluation of whether sealing portion is deformed

Three pouch film laminates produced in each of Examples 1 to 5, and Comparative Examples 1 to 6 were prepared. Then, each pouch film laminate was cut into 266 mm in width and 200 mm in height, and was folded in half into a size of 133 mm in width × 200 mm such that sealant layers come in contact with each other. Next, the end portions of the long sides (200 mm) were sealed under the following three conditions to manufacture pouch-type battery casings, respectively.
- Sealing for 1.8 sec under conditions of 210°C and surface pressure of 1.2 MPa with a seal bar area of 200 mm × 8 mm
- Sealing for 1.8 sec under conditions of 220°C and surface pressure of 1.0 MPa with a seal bar area of 200 mm × 8 mm
- Sealing for 1.8 sec under conditions of 230°C and surface pressure of 0.9 MPa with a seal bar area of 200 mm × 8 mm

Next, for each of the pouch-type battery casings sealed at different temperatures, it was checked with the naked eye whether bubbles were generated in the second base layer located at the sealing portion and thus the sealing portion was deformed. The results are noted in the following Table 2.
O: Bubbles were generated and thus the sealing portion was deformed
X: Bubbles were not generated, and the sealing portion was not deformed

**[Table 2]**

| | Whether sealing portion was deformed due to bubble generation | | |
|---|---|---|---|
| Sealing temperature | 210°C | 220°C | 230°C |
| Example 1 | X | X | X |
| Example 2 | X | X | X |
| Example 3 | X | X | O |
| Example 4 | X | X | X |
| Example 5 | X | X | O |
| Comparative Example 1 | X | O | O |
| Comparative Example 2 | X | O | O |
| Comparative Example 3 | O | O | O |
| Comparative Example 4 | X | O | O |
| Comparative Example 5 | X | O | O |
| Comparative Example 6 | O | O | O |

According to Tables 1 and 2, in the case of Examples 1 to 5 where the moisture content index of the second base layer was 17,000 ppm·g/cm3 or less, unlike in Comparative Examples 1 to 6, it can be confirmed that even when sealing is performed at a temperature condition of 220°C, no bubbles are generated in the second base layer and the sealing portion of the pouch-type battery casing is not deformed.

Also, in the case of Examples 1, 2 and 4 where the moisture content index of the second base layer was 16,000 ppm ·g/cm3 or less, it can be confirmed that even when sealing is performed at a temperature condition of 230°C, no bubbles are generated in the second base layer and the sealing portion of the pouch-type battery casing is not deformed.

### LIST OF REFERENCE NUMERALS

- 100: pouch film laminate
- 110: base layer
- 112: first base layer
- 114: second base layer
- 120: gas barrier layer
- 130: sealant layer
- 200: pouch-type secondary battery
- 210: pouch-type battery casing
- 220: first casing
- 222: cup portion
- 224: accommodation portion
- 230: second casing
- 232: cup portion
- 240: bridge portion
- 250: sealing portion
- 260: electrode assembly
- 270: electrode tab
- 271: negative electrode tab
- 272: positive electrode tab
- 280: electrode lead
- 282: positive electrode lead
- 284: negative electrode lead
- 290: insulator

## Claims

1. A pouch film laminate comprising:
a first base layer, a second base layer, a gas barrier layer and a sealant layer which are sequentially stacked,
wherein a moisture content index of the second base layer, which is represented by the following Formula 1, is 17,000 ppm·g/cm3 or less. Moisture content index of second base layer = Moisture content (ppm) per unit weight of pouch film laminate× density (g/cm3) of pouch film laminate × thickness (µm) of pouch film laminate/thickness (µm) of second base layer

2. The pouch film laminate according to claim 1, wherein a moisture content per unit weight of the pouch film laminate is 1,500 ppm or less.

3. The pouch film laminate according to claim 1, wherein a thickness of the first base layer is 10 µm to 50 µm.

4. The pouch film laminate according to claim 1, wherein the first base layer includes a polyester-based film.

5. The pouch film laminate according to claim 1, wherein the first base layer includes at least one type selected from the group including polyethyleneterephthalate, polybutyleneterephthalate, and polyethylenenaphthalate.

6. The pouch film laminate according to claim 1, wherein a thickness of the second base layer is 10 µm to 50 µm.

7. The pouch film laminate according to claim 1, wherein the second base layer includes a polyamide-based film.

8. The pouch film laminate according to claim 1, wherein the second base layer includes at least one type of polyamide-based film selected from the group including nylon 6, nylon 6,6, nylon MXD6 (polyxylylene adipamide), nylon 4, nylon 4,6 and nylon 4,10.

9. The pouch film laminate according to claim 1, wherein a melting temperature of the second base layer is 220°C or more.

10. The pouch film laminate according to claim 1, wherein a thickness of the gas barrier layer is 30 µm to 100 µm.

11. The pouch film laminate according to claim 1, wherein the gas barrier layer contains aluminum.

12. The pouch film laminate according to claim 1, wherein a thickness of the sealant layer is 30 µm to 130 µm.

13. A pouch type battery case which is prepared by forming the pouch film laminate of any one of claims 1 to 12.

14. A pouch type secondary battery comprising:
a pouch type battery case prepared by forming the pouch film laminate of any one of claims 1 to 12; and
an electrode assembly accommodated in the pouch type battery case.
